Europäisches Patentamt

European Patent Office

Office européen des brevets

(19)

(11) **EP 0 765 899 B1**

(12) **EUROPÄISCHE PATENTSCHRIFT**

(45) Veröffentlichungstag und Bekanntmachung des Hinweises auf die Patenterteilung:
**29.01.2003 Patentblatt 2003/05**

(51) Int Cl.⁷: **C08J 3/22**, C08K 9/12

(21) Anmeldenummer: **96115413.5**

(22) Anmeldetag: **26.09.1996**

(54) **Verfahren zur Modifizierung von Dispersionspulver-Zusammensetzungen**

Process of modifying dispersion powder compositions

Procédé pour modifier des compositions de poudre de dispersion

(84) Benannte Vertragsstaaten:
**AT BE CH DE FI FR GB IT LI SE**

(30) Priorität: **26.09.1995 DE 19535833**

(43) Veröffentlichungstag der Anmeldung:
**02.04.1997 Patentblatt 1997/14**

(73) Patentinhaber: **Wacker-Chemie GmbH**
**81737 München (DE)**

(72) Erfinder:
• **Eck, Herbert, Dr.**
**84489 Burghausen (DE)**
• **Herold, Hardy, Dr.**
**84489 Burghausen (DE)**

• **Hopf, Heinrich**
**84489 Burghausen (DE)**

(74) Vertreter: **Schuderer, Michael, Dr. et al**
**Wacker-Chemie GmbH**
**Zentralabteilung Patente**
**Marken und Lizenzen**
**Hanns-Seidel-Platz 4**
**81737 München (DE)**

(56) Entgegenhaltungen:
**EP-A- 0 056 622          EP-A- 0 184 276**
**EP-A- 0 493 168          EP-A- 0 601 518**
**DE-A- 4 402 408          US-A- 3 883 489**

**Beschreibung**

Die Erfindung betrifft ein Verfahren zur Modifizierung von in Wasser redispergierbaren Dispersionspulver-Zusammensetzungen, auf der Basis von Polymerisaten ethylenisch ungesättigter Verbindungen, mit flüssigen Zusatzstoffen.

In Wasser redispergierbare Dispersionspulver-Zusammensetzungen auf der Basis von Polymerisaten ethylenisch ungesättigter Verbindungen gewinnen für die unterschiedlichsten Anwendungen immer mehr an Bedeutung. Zur Herstellung solcher redispergierbarer Dispersionspulver wird dabei von den entsprechenden wäßrigen Dispersionen der Polymerisate ausgegangen, welche mittels bekannter Verfahren, üblicherweise unter Zusatz von Verdüsungshilfen und Antiblockmitteln, getrocknet werden. Im allgemeinen erfolgt die Trocknung mittels Sprühtrocknung, daneben sind noch Gefriertrocknung und in gewissen Fällen Dünnschichttrocknung der Polymerdispersionen möglich. Verfahren zur Herstellung von redispergierbaren Dispersionspulvern sind in der Patentliteratur vielfach beschrieben; als Beispiele seien die EP-A 78449 und die EP-A 149098 (US-A 4859751) genannt.

Zur Anpassung der Eigenschaften der Dispersionspulver an die in den einzelnen Anwendungen geforderten Anforderungsprofile besteht häufig die Notwendigkeit, die Dispersionspulver mit Zusatzstoffen zu modifizieren. Insbesonders die nachträgliche Zugabe von flüssigen Zusatzstoffen, wie etwa Hydrophobierungsmitteln, Emulgatoren, Haftvermittler, Vernetzer, Biozide oder Verfilmungshilfsmitteln, ist dabei problematisch, da deren Zugabe häufig zur Verblockung der Pulver führt bzw. die erforderliche Menge nicht homogen zugemischt werden kann.

In der EP-A 493168 wird vorgeschlagen, die als Hydrophobierungsmittel eingesetzten flüssigen Polysiloxane zusammen mit der Polymerdispersion zu verdüsen. Nachteilig bei dieser Verfahrensweise ist, daß bei Coverdüsung in manchen Fällen die Alkoxysilan-Funktionen von Polysiloxanen unter den Bedingungen der Sprühtrocknung vorzeitig hydrolysieren können. Silane und Siloxane mit leichter hydrolysierbaren Gruppen wie z. B. Oxim-, Amin- und Acylgruppen können auf diese Weise nicht eingearbeitet werden.

Die Modifizierung von Dispersionspulvern durch Coverdüsung der flüssigen Zusatzstoffe mit der Polymerdispersion ist auch in anderen Fällen nicht universell anwendbar. Bei der Coverdüsung von vielen Emulgatoren mit Polymerdispersionen kann aufgrund von Wechselwirkungen der Emulgatoren oder auch von wasserlöslichen, flüssigen Zusatzstoffen mit den als Verdüsungshilfe eingesetzten Schutzkolloiden deren Glasübergangstemperatur soweit herabgesetzt werden, daß es zur Verblockung der Polymerteilchen kommt. Sowohl die Redispergierbarkeit der Pulver als auch deren Lagerstabilität werden dadurch verschlechtert.

Niedrigsiedende oder wasserdampfflüchtige, flüssige Zusatzstoffe lassen sich durch Coverdüsung ebenfalls nicht einarbeiten, da diese unter den Bedingungen der Sprühtrocknung zumindest teilweise mit dem Wasserdampf bzw. Inertgas entweichen. Dies würde die Anschaffung und den Betrieb einer teuren Rückgewinnungsanlage oder einer Rückstandsverbrennungsanlage zur Verbrennung der in das Abgas gelangenden, oft teuren Flüssigkeitsdämpfe erforderlich machen.

Große Schwierigkeiten bei der Zumischung mittels Coverdüsung bereiten vor allem flüssige Zusatzstoffe, welche in Wasser löslich oder in Wasser selbstemulgierbar sind. Die als Alternative denkbare nachträgliche Zumischung solcher Flüssigkeiten zum Pulver führt zu den bereits obengenannten Problemen der Verblockung bzw. Inhomogenität der Mischung.

Es bestand daher die Aufgabe, ein Verfahren zur Modifizierung von redispergierbaren Dispersionspulver-Zusammensetzungen mit flüssigen Zusatzstoffen zu entwickeln, mittels dessen solche Flüssigkeiten in die Dispersionspulver eingearbeitet werden können, ohne daß eine Zersetzung der Zusatzstoffe, ein Entweichen der Zusatzstoffe, eine vorzeitige Vernetzung des Basispolymeren, oder eine Verschlechterung der Redispergierbarkeit der Dispersionspulver eintritt.

Gegenstand der Erfindung ist ein Verfahren zur Herstellung von mit Zusatzstoffen modifizierten, in Wasser redispergierbaren Dispersionspulver-Zusammensetzungen auf der Basis von Polymerisaten ethylenisch ungesättigter Verbindungen durch Trocknung der entsprechenden wäßrigen Polymerisat-Dispersionen und Zugabe der Zusatzstoffe, dadurch gekennzeichnet, daß die bei einer Temperatur von ≤ 50°C flüssigen Zusatzstoffe auf eine pulverförmige Trägersubstanz aufgebracht werden, und das so erhaltene Pulver nach der Trocknung zugegeben wird.

Geeignete Polymerisate ethylenisch ungesättigter Verbindungen sind Polymerisate mit einer $T_g$ von -60°C bis +60°C, enthaltend ein oder mehrere Monomereinheiten aus der Gruppe umfassend Vinylester von unverzweigten oder verzweigten Alkylcarbonsäuren mit 1 bis 15 C-Atomen, Acrylsäureester und Methacrylsäureester von unverzweigten oder verzweigten, linearen oder cyclischen Alkoholen mit 1 bis 12 C-Atomen, Mono- oder Diester der Fumarsäure oder Maleinsäure von unverzweigten oder verzweigten, linearen oder cyclischen Alkoholen mit 1 bis 12 C-Atomen, Diene, Vinylaromaten, Vinylhalogenide und α-Olefine.

Bevorzugt werden Polymerisate, welche folgende Monomereinheiten enthalten:

Vinylacetat;
Vinylacetat und Ethylen mit einem Ethylenanteil von 5 bis 50 Gew%;

Vinylacetat und 1 bis 30 Gew% Vinyllaurat oder Vinylester einer $\alpha$-verzweigten Carbonsäure mit 5 bis 10 C-Atomen (beispielsweise VeoVa9[R] oder VeoVa10[R]) und/oder Norbornyl-monocarbonsäurevinylester (NMCV) und 5 bis 40 Gew% Ethylen; Vinylacetat und 1 bis 30 Gew% Vinyllaurat oder Vinylester einer $\alpha$-verzweigten Carbonsäure mit 5 bis 10 C-Atomen (beispielsweise VeoVa9[R] oder VeoVa10[R]);

Vinylacetat, und 1 bis 30 Gew% Acrylsäureester, insbesonders n-Butylacrylat oder 2-Ethylhexylacrylat;

Vinylacetat, 1 bis 30 Gew% Acrylsäureester, insbesonders n-Butylacrylat oder 2-Ethylhexylacrylat, sowie 5 bis 40 Gew% Ethylen;

Vinylacetat, 1 bis 30 Gew% Vinyllaurat oder Vinylester einer $\alpha$-verzweigten Carbonsäure mit 5 bis 10 C-Atomen (bspw. VeoVa9[R] oder VeoVa10[R]), 1 bis 30 Gew% Acrylsäureester, insbesonders n-Butylacrylat oder 2-Ethylhexylacrylat, sowie 5 bis 40 Gew% Ethylen;

Methylmethacrylat und 35 bis 65 Gew% Acrylsäureester, insbesonders n-Butylacrylat und/oder 2-Ethylhexylacrylat;

Styrol und 35 bis 65 Gew% Acrylsäureester, insbesonders n-Butylacrylat und/oder 2-Ethylhexylacrylat;

Vinylchlorid und mindestens 5 Gew% Ethylen und gegebenenfalls bis zu 70 Gew% Vinyllaurat oder Vinylester einer $\alpha$-verzweigten Carbonsäure mit 5 bis 10 C-Atomen (bspw. VeoVa9[R] oder VeoVa10[R]).

Gegebenenfalls enthalten die genannten Polymerisate-0.05 bis 10.0 Gew%, bezogen auf das Gesamtgewicht des Polymerisats, ein oder mehrere Hilfsmonomere aus der Gruppe der ethylenisch ungesättigten Carbonsäuren, vorzugsweise Acrylsäure, Methacrylsäure, Crotonsäure, Maleinsäure oder Fumarsäure; aus der Gruppe der ethylenisch ungesättigten Carbonsäureamide, vorzugsweise Acrylamid und 2-Acrylamidopropansulfonsäure; aus der Gruppe der ethylenisch ungesättigten Sulfonsäuren bzw. deren Salze, vorzugsweise Vinylsulfonsäure; aus der Gruppe der mehrfach ethylenisch ungesättigten Comonomeren, beispielsweise Divinyladipat, 1,9-Decadien, Allylmethacrylat, Triallylcyanurat; aus der Gruppe der siliciumhaltigen ethylenisch ungesättigten Verbindungen wie zum Beispiel $\gamma$-Acryl-, $\gamma$-Methacryloxypropyltri(alkoxy)-silane und Vinyltrialkoxysilane sowie die entsprechenden Vinylmethyldialkoxysilane; aus der Gruppe N-Methylolacrylamid (NMA), N-Methylolmethacrylamid (NMMA), N-(Alkoxymethyl)acrylamide, N-(Alkoxymethyl)methacrylamide, sowie Epoxygruppen enthaltende ethylenisch ungesättigte Verbindungen wie z. B. Glycidyl(meth)acrylat; ferner Amin- oder Hydroxylgruppen enthaltende ethylenisch ungesättigte Verbindungen wie Hydroxyethyl(meth)acrylat, Hydroxypropyl(meth)acrylat.

Die Herstellung der, den Dispersionspulvern zugrundeliegenden, wäßrigen Polymerisatdispersion erfolgt vorzugsweise mit dem Emulsionspolymerisationsverfahren. Die Emulsionspolymerisation wird im offenen Reaktionsgefäß oder in Druckgefäßen, vorzugsweise in einem Temperaturbereich von 0 bis 100°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 1.0 Gew%, bezogen auf das Gesamtgewicht der Monomeren, eingesetzt werden. Beispiele hierfür sind Ammonium- und Kaliumpersulfat, Alkylhydroperoxide, wie tert.-Butylhydroperoxid; Wasserstoffperoxid. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Formaldehydsulfoxylat-Salze, Natriumbisulfit oder Ascorbinsäure. Bei der Redoxinitiierung werden dabei vorzugsweise. eine oder beide Redox-Katalysatorkomponenten während der Polymerisation dosiert.

Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente.

Als Dispergiermittel können alle üblicherweise bei der Emulsionspolymerisation verwendeten Emulgatoren und Schutzkolloide eingesetzt werden. Es können 0 bis 4 Gew%, bezogen auf das Gesamtgewicht der Monomeren, an Emulgator eingesetzt werden. Vorzugsweise wird mit Emulgatormengen < 1.0 Gew%, oder wegen der eingangs diskutierten Problematik ohne Emulgator polymerisiert.

Geeignet sind beispielsweise anionische Tenside, wie Alkylsulfate mit einer Kettenlänge von 8 bis 18 C-Atomen, Alkylund Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Acetylenglykole wie Surfynol[R] der Fa. Air Products.

Vorzugsweise werden als Dispergiermittel Schutzkolloide, je nach Viskosität und Art im allgemeinen in Mengen von bis zu 50 Gew%, bezogen auf das Gesamtgewicht der Monomeren, eingesetzt. Beispiele hierfür sind Vinylalkohol/Vinylacetat-Copolymere mit einem Gehalt von 80 bis 100 Mol% Vinylalkoholeinheiten, Polyvinylpyrrolidone mit einem Molekulargewicht von 5000 bis 400000, mit Hydroxyethyl-, Carboxymethyl-, Hydroxypropyl- und/oder Methyl-substituierte Cellulosen mit einem Substitutionsgradbereich von 1.5 bis 3, wasserlösliche Stärken und Stärkederivate sowie andere wasserlösliche Polysaccharide oder deren wasserlösliche Derivate, ferner Phenolund Naphthalin-Formaldehydsulfonate, Styrolmaleinsäure- und Vinylethermaleinsäure-Copolymere, wasserlösliche Proteine wie Casein und Gelatine.

Der für die Polymerisation gewünschte pH-Bereich, der im allgemeinen zwischen 2.5 und 7 liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe, zugesetzt werden.

Der Feststoffgehalt der wäßrigen Dispersionen beträgt vorzugsweise 20 bis 60 Gew%.

Zur Herstellung der redispergierbaren Dispersionspulver-Zusammensetzungen werden die wäßrigen Polymerisat-Dispersionen schließlich getrocknet. Geeignete Trocknungsverfahren sind beispielsweise Sprühtrocknung und Gefriertrocknung. In manchen Fällen, wenn das Produkt unter den Trocknungsbedingungen nicht plastifiziert, können auch Walzentrockner, Bandtrockner oder Scheibentrockner verwendet werden. Vorzugsweise werden die Dispersionen sprühgetrocknet oder gefriergetrocknet.

Am meisten bevorzugt ist die Sprühtrocknung der Dispersionen. Hierbei kann auf die bekannten Vorrichtungen, wie zum Beispiel Versprühen durch Ein-, Zwei- oder Mehrstoffdüsen oder mit einer rotierenden Scheibe, in einem gegebenenfalls erhitzten Trockengasstrom, vorzugsweise Luft, zurückgegriffen werden. Im allgemeinen werden Temperaturen über 250°C als Eintrittstemperatur des Trockengases nicht angewandt. Die Austrittstemperaturen des Trockengases liegen im allgemeinen im Bereich von 55 bis 100°C, bevorzugt 65 bis 90°C, je nach Anlage, Produktzusammensetzung und gewünschtem Trocknungsgrad.

Zur Trocknung werden die Dispersionen auf einen Festgehalt von 10 bis 75 Gew%, vorzugsweise 20 bis 65 Gew% eingestellt. Der Festgehalt ist abhängig vom gewählten Trocknungsverfahren und von Art und Menge weiterer Zusatzstoffe, welche bei der Trocknung zugegeben werden.

Beispielsweise können der Dispersion vor der Trocknung Verdüsungshilfen zugegeben werden. Die Zugabe erfolgt vorzugsweise in Form deren wäßriger Lösungen, in Mengen von vorzugsweise 5 bis 40 Gew%, insbesondere 5 bis 20 Gew%, bezogen auf das Polymerisat. Die optimale Menge richtet sich nach der Stabilisierung der Dispersion, der Glasübergangstemperatur des enthaltenen Polymerisats und den gewünschten Pulvereigenschaften.

Als Verdüsungshilfen eignen sich unter anderem, allein oder in Kombination, Cyclodextrine, Cyclodextrinderivate, abgebaute oder modifizierte Stärken, Stärkederivate, Cellulosederivate und andere wasserlösliche Polymere, insbesondere solche mit hohen Glasübergangstemperaturen von mindestens 50°C. Beispiele für derartige, vielfach handelsübliche Polymere sind: Vinylalkohol-Copolymere (Polyvinylalkohol) mit einem Hydrolysegrad von vorzugsweise 80 bis 97 Mol% und einer Höppler-Viskosität, bestimmt in 4 %-iger Lösung, von bevorzugt 3 bis 25 mPa.s; vorzugsweise vollverseifte Copolymere von Vinylacetat und beispielsweise Ethylen, N-Vinylamide, ungesättigte Carbonsäuren oder Alkylvinylestern, bevorzugt mit einer Höppler-Viskosität von 1 bis 25 mPa.s; vinylpyrrolidon-(Co)-Polymere; Ligninsulfonate; wasserlösliche sulfonatgruppenhaltige Kondensate aus Melamin und Formaldehyd oder Naphthalin und Formaldehyd; Phenolsulfonsäure-Formaldehyd-Kondensate; Polyacrylamide; Copolymerisate aus Styrol und Maleinsäure und/oder Itaconsäure und deren Ester; wasserlösliche Copolymere aus olefinisch ungesättigten Säuren und Alkenen; wasserlösliche Copolymere aus Monomeren wie Acrylsäure, Methacrylsäure, Itaconsäure, Fumarsäure, Methyl-, Ethyl-, Butyl-(meth)acrylat, Ethylhexylacrylat, Decylacrylat, Hydroxyethyl-, Hydroxypropyl-(meth)acrylat.

Bei der Verdüsung hat sich vielfach ein Gehalt von bis zu 1.5 Gew% Antischaummittel, bezogen auf das Basispolymerisat, als günstig erwiesen. Flüssige Antischaummittel werden normalerweise der Dispersion vor dem Trocknen zugesetzt, feste können in die trockene Dispersionspulverzusammensetzung eingemischt werden.

Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel, vorzugsweise bis zu 30 Gew%, bezogen auf das Gesamtgewicht polymerer Bestandteile, versetzt werden. Dies erfolgt vorzugsweise während des Trocknungsvorgangs und/oder solange das Pulver noch fein verteilt ist, beispielsweise noch im Trockengas suspendiert ist. Insbesondere wird das Antiblockmittel getrennt aber gleichzeitig mit der Dispersion in die Trocknungsvorrichtung dosiert. Beispiele für Antiblockmittel sind fein gemahlene Aluminiumsilikate, Kieselgur, kolloidales Silicagel, pyrogene Kieselsäure, Fällungskieselsäure, Micro-Silica, Leichtspat, Kaolin, Talkum, Zemente, Diatomeenerde, Magnesium- und/oder Calciumcarbonat oder Magnesiumhydrosilikat.

Zur Einarbeitung von Zusatzstoffen, welche bei Temperaturen von ≤ 50°C, vorzugsweise < 35°C, flüssig sind, werden diese auf eine pulverförmige Trägersubstanz aufgetragen. Als flüssige Zusatzstoffe werden in diesem Zusammenhang solche verstanden, die bei den maximal auftretenden Lagertemperaturen von redispergierbaren Pulvern, im allgemeinen ≤ 50 °C, in flüssigem oder pastösem Zustand vorliegen.

Bevorzugte Beispiele für solche flüssigen oder pastöse Zusatzstoffe sind aus der Gruppe der wasserlöslichen oder in Wasser selbstemulgierenden Flüssigkeiten:

Ethylenglykol, Propylenglykol, Pentandiol, Polyethylenglykol und Ethylenglykol-Propylenglykolcopolyäther, Ethylenglykolbisacetoacetat, Acetylaceton, Hexamethylendiamin, γ-Aminopropyltriethoxysilan, bei Raumtemperatur flüssige oder pastenförmige Emulgatoren wie Alkylphenol(oligo)glykolether, z.B. verschiedene Arkopal[R] N-Typen der Fa. Hoechst oder die Genapol[R] OX-Typen der Fa. Hoechst AG. Aber auch amphotere, anionische und kationische Emulgatoren, entsprechender Konsistenz, die auf Grund der eingangs erwähnten Schwierigkeiten den redispergierbaren Pulvern nicht direkt zugemischt werden können und auch nicht vor deren Herstellung, z.B. vor der Sprühtrocknung, zugegeben werden können, lassen sich in der erfindungsgemäßen Weise auf einfache und wirtschaftliche Art den Pulvern beimischen. Zusammenstellungen von Emulgatoren findet man z.B. im "Ullmann", 5. Aufl., 1987, 9, S. 312 ff, im "Tensid-Taschenbuch", Carl Hanser Verlag München, Wien 1990 und "Mc Cutcheons Emulsifiers and Detergents", 1986.

Bevorzugte Beispiele für solche flüssigen oder pastöse Zusatzstoffe sind aus der Gruppe der wasserunlöslichen Flüssigkeiten:

Verfilmungshilfsmittel und Weichmacher wie BCA (Ethylenglykolmonobutylätheracetat), Dimethylphthalat, Dibutylphthalat, Diethylhexylphthalat, Dibutyladipat.
Katalysatoren wie Butylhydroperoxid, Lauroylperoxid.
Als Hydrophobierungsmittel und/oder Vernetzer wirkende Silane und Siloxane wie Ethylhexyltriethoxysilan, Hexamethyldisiloxan, γ-Mercaptopropyltriethoxysilan, Methyltriethoxysilan in monomerer oder teilweise kondensierter Form.
Flüssige Isocyanate, die als Vernetzer und/oder Schaumentwickler ($CO_2$-Entwicklung bei Reaktion mit Wasser) eingesetzt werden können, wie Hexamethylendiisocyanat, 2.4- u. 2.6-Toluylendiisocyanat.

Als wasserlösliche oder in Wasser selbstemulgierende Flüssigkeiten sollen im allgemeinen solche Flüssigkeiten verstanden werden, die bei Raumtemperatur und dem Druck der umgebenden Atmosphäre zu mindestens 1 g pro 1000 g Wasser löslich oder emulgierbar sind. Besonders bevorzugt ist die erfindungsgemäße Verfahrensweise für die Einarbeitung von wasserlöslichen oder in Wasser selbstemulgierenden flüssigen Zusatzstoffen.

Die Teilchengröße der pulverförmigen, anorganischen oder organischen Trägersubstanzen beträgt vorzugsweise von 0.005 bis 3000 μm, insbesonders bis 500 μm. Als adsorptiv wirkende Trägersubstanzen eignen sich vorzugsweise feinteilige Festkörper mit möglichst großer BET-Oberfläche, vorzugsweise > 5 $m^2$/g, besonders bevorzugt > 10 $m^2$/g.

Von Bedeutung ist auch die chemische Zusammensetzung und die Morphologie der pulverförmigen Trägersubstanzen, da davon abhängt, ob die flüssigen Zusatzstoffe an der Oberfläche der Trägersubstanz adsorbiert und/oder in deren Hohlräumen eingeschlossen werden, oder ob sie sich in der Trägersubstanz lösen.

Für viele Anwendungen ist es von Vorteil, wenn als Trägersubstanz ein Adsorptionsmittel eingesetzt wird, in dem der adsorbierte Stoff (flüssiger Zusatzstoff) unter den Herstellungs- und Lagerungsbedingungen nicht oder nur schwer löslich ist, da dann, auch nach langer Lagerzeit, bei der Anwendung die Freisetzung rasch erfolgt.

Besonders bevorzugt sind daher poröse Adsorptionsmittel mit einer Flüssigkeitsaufnahme von 10 bis 75 Gew%, insbesonders 15 bis 60 Gew%, bezogen auf das Gesamtgewicht an Trägersubstanz. Die Flüssigkeitsaufnahme solcher Trägersubstanzen kann dabei mit gängigen Methoden bestimmt werden, beispielsweise durch Bestimmung der DOP-Aufnahme analog DIN 53417, oder durch Bestimmung der Quecksilberporosität mit Geräten wie Autopore II 9220.

Eine rasche Entfaltung der Wirkung der Zusatzstoffe nach Redispergierung des Pulvers kann auch erreicht werden, falls poröse Trägersubstanzen verwendet werden, die zudem wasserlöslich sind, wobei unter wasserlöslich verstanden wird, daß die bei der vorgesehenen Anwendung eingesetzte Wassermenge zur Lösung der Trägersubstanz ausreicht. Im allgemeinen ist dies bei einer Wasserlöslichkeit der Trägersubstanz unter Normalbedingungen von mindestens 1 g pro 1000 g Wasser der Fall.

Beispiele für adsorptiv wirkende und/oder die Flüssigkeiten in ihre Poren einschließende Trägersubstanzen sind gefällte Kreide und andere feinteilige Carbonate, wie Magnesiumcarbonat und/oder Calciumcarbonat, sowie Magnesiumhydrosilicate, feinteiliges Titandioxid, Tonerden, Bleicherden, aktiviertes Aluminiumoxid, Vermiculite wie Bentonit, expandiertes Perlit, sowie Phosphate wie Na-Phosphat.

Geeignet sind auch organische Materialien wie zum Beispiel wasserlösliche oder wasserunlösliche Polyvinylalkohol-Pulver; pulverförmige, wasserlösliche oder wasserunlösliche Cellulose(derivate) wie Cellulose- und Celluloseether-Pulver; pulverförmige, wasserlösliche oder wasserunlösliche Stärke(derivate) wie Stärke-Pulver; Polyvinylchlorid-Pulver insbesonders S-PVC, und Polystyrol-Pulver.

Ist eine verzögerte Wirkung erwünscht, verwendet man wasserunlösliche Trägersubstanzen in denen die flüssigen Zusatzstoffe löslich sind. Besteht die Gefahr, daß die zugesetzten, flüssigen Substanzen z.B. auf Grund der guten Verträglichkeit mit dem Schutzkolloid bei langer Lagerung in dieses eindringen oder, daß sie auf Grund ihres niedrigen Dampfdrucks langsam entweichen, sind ebenfalls Trägersubstanzen zu empfehlen, die diese Substanzen lösen, dabei aber nicht klebrig werden und dadurch die Blockfestigkeit und Redispergierbarkeit der Dispersionspulver-Zusammensetzung negativ beeinflußen. Bevorzugt werden dazu solche Trägersubstanzen eingesetzt, welche mehr als 10 %, vorzugsweise mehr als 20 %, ihres Gewichtes von dem flüssigen Zusatzstoff aufnehmen können, ohne dabei zu verkleben.

Will man die Flüssigkeit in weitgehend im Trägermaterial gelöster Form dem redispergierbaren Pulver zusetzen, verwendet man vorzugsweise vernetzte Materialien, beispielsweise Kautschuke wie Naturkautschuk, Isopren-, Styrolbutadien-, Chloropren-, Butadienacrylnitril-, Isobutylenisopren-, Ethylenpropylendien-, Acrylatbutadien-, Polysulfid-, Silicon-, Butadien-, Epichlorhydrinethylenoxid-Kautschuk; und Duroplaste wie Epoxiharze, Melamin-, Harnstoff-, Phenolformaldehyd-Harze, Polyesterharze, Siliconharze. Weitere Beispiele sind vernetzte Polyvinylalkohole und vernetzte Polysaccharide wie vernetzte Stärken oder vernetzte Cellulosen. Solche Produkte können bekannterweise besonders große Mengen an Flüssigkeit aufnehmen ohne dabei ihren Feststoffcharakter zu verlieren.

Natürlich können auch die bekannten Adsorptionsmittel Ruß und hochdisperse Kieselsäure verwendet werden, jedoch sind diese wegen der schwarzen Farbe bzw. wegen des hohen Preises und oft auch wegen der zu starken Haftung der adsorbierten Flüssigkeiten nicht bevorzugt. Auf alle Fälle muß durch geeignete Auswahl der Trägersubstanz sichergestellt werden, daß keine chemische Bindung zwischen der Trägersubstanz und der Flüssigkeit erfolgt, sofern diese eine Freisetzung der Flüssigkeit bzw. deren beabsichtigte Wirkung unter den gegebenen Bedingungen verhindern würde.

Das Mengenverhältnis von pulverförmiger Trägersubstanz zu flüssigem Zusatzstoff hängt von der Art des Zusatzstoffes, seiner Morphologie und der Art der Bindung an die Trägersubstanz, adsorbtiv oder absorbtiv, ab. Im allgemeinen werden 15 bis 60 Gew% eines oder mehrerer flüssiger Zusatzstoffe auf 40 bis 85 Gew% einer oder mehreren Trägersubstanzen adsorbiert und/oder in der Trägersubstanz gelöst, wobei sich die Angaben in Gew% auf das Gesamtgewicht der Trägersubstanzen und Zusatzstoffe beziehen.

Das Aufbringen der Flüssigkeiten auf die Trägersubstanzen kann in jedem beliebigen, für Pulvermischungen geeigneten Gerät erfolgen, wobei sich vielfach hohe Scherkräfte negativ auswirken. Geeignete Geräte sind in Schaab/ Stoeckhert, Kunststoffmaschinenführer, Carl Hanser Verlag, München, Wien 1979 beschrieben.

Genannt seien kontinuierlich u. diskontinuierlich arbeitende Schneckenbandmischer, Doppelspiralmischer, Schaufelmischer, Pflugscharmischer und schnell- u. langsamlaufende Paddelmischer. Ferner seien Wirbelschneckenmischer und Trogmischer erwähnt. Auch Mischer mit rotierenden Mischbehältern sind brauchbar, wie z.B. die Rhönradmischer, Taumelmischer, Doppelkonusmischer und V-Mischer. Die Mischung erfolgt im allgemeinen bei Raumtemperatur. In verschiedenen Fällen ist es jedoch vorteilhaft sie bei erhöhter Temperatur durchzuführen. Dies gilt öfters dann, wenn die Viskosität der flüssigen oder gar pastösen Substanz bei Raumtemperatur für eine gleichmäßige Einarbeitung zu hoch ist, wenn die Substanz einen knapp über der Raumtemperatur liegenden Schmelzpunkt aufweist oder wenn man die Substanz in der Trägersubstanz ganz oder teilweise lösen will.

Im allgemeinen ist es vorteilhaft das Trägermaterial vorzulegen und die Flüssigkeit zuzudosieren, eventuell sogar aufzusprühen. Die Mischung kann natürlich auch kontinuierlich erfolgen.

Auch die Einmischung der so erhaltenen Pulver in die redispergierbaren Pulver kann in ähnlichen Mischaggregaten diskontinuierlich oder kontinuierlich im allgemeinen bei Raumtemperatur erfolgen. Die pulverförmige Zusatzstoff/Trägersubstanz-Zusammensetzung wird nach Abschluß des Trocknungsvorgangs dem Dispersionspulver zugegeben Ein bevorzugtes Verfahren ist die kontinuierliche Zudosierung des Pulvers in den Sprühtrockner, nach erfolgtem Trocknungsvorgang der Polymerdispersion, gegebenenfalls zusammen mit anderen, auf herkömmliche Weise zumischbaren Zusatzstoffen, wie z.B. Antiblockmitteln, Entschäumern, Schaumstabilisatoren, Füllstoffen, Farbstoffen, Bioziden, Verdickungsmittel.

Die Menge, in der die Zusatzstoff/Trägersubstanz-Zusammensetzung dem Dispersionspulver nach dessen Trocknung zugegeben wird, ist beliebig und orientiert sich nach der in der Dispersionspulver-Zusammensetzung erwünschten Menge an Zusatzstoff.

Besonders vorteilhaft ist das erfindungsgemäße Verfahren bei niedrigsiedenden und bei wasserdampfflüchtigen Substanzen. In solchen Fällen wäre eine in der Anschaffung und im Betrieb (energieaufwendig) teure Rückgewinnungsanlage oder eine Verbrennung der in das Abgas gelangenden, oft teuren Flüssigkeitsdämpfe erforderlich. Das kann bei Flüssigkeiten mit einem relativ hohen Siedepunkt von etwa $350°C$ auf Grund der Wasserdampfflüchtigkeit schon erforderlich werden. Bei Flüssigkeiten mit einem Siedepunkt $< 250°C$ ist es häufig, bei solchen die unter $160°C$ sieden, praktisch immer der Fall.

Weiter sei betont, daß mit den bekannten Verfahren die Einarbeitung von wasserlöslichen, aber auch von in Wasser selbstemulgierenden, flüssigen Substanzen in redispergierbare Pulver oft schwieriger ist als die von wasserunlöslichen Flüssigkeiten.

Besonders vorteilhaft ist das erfindungsgemäße Verfahren auch für flüssige Zusatzstoffe, die sich bei der Herstellung der redispergierbaren Pulver nach den bekannten Verfahren verflüchtigen oder verändern, z.B. durch Hydrolyse, Wechselwirkung mit anderen Pulverbestandteilen oder Zersetzung; oder wenn diese die Lagerfähigkeit oder Redispergierbarkeit der Dispersionspulver-Zusammensetzung herabsetzen. Beispiele hierfür sind:

- Emulgatoren, welche als rheologische Additive verwendet werden, aber aufgrund der Wechselwirkung mit dem Schutzkolloid-Anteil zur Verblockung der Dispersionspulver führen können.

- Weichmacher oder Verfilmungshilfsmittel zur Erniedrigung der Filmbildungstemperatur, wie BCA, die auf Grund ihres relativ niedrigen Siedepunktes die Härte des Filmes nur vorübergehend erniedrigen sollen. Damit können sie sich bei Zugabe während der Trocknung verflüchtigen oder die Verblockung fördern.
- Hydrolyseempfindliche Zusatzstoffe zur Haftungsverbesserung bzw. Hydrophobierung wie Silane, z.B. γ-Aminopropyltriethoxysilan bzw. Methyl- und Propyltriethoxysilan.
- Reaktive Vernetzer zur Verbesserung der Lösemittelfestigkeit des Copolymeren durch Vernetzung, z.B. Diamine, Bisacetoacetate und Isocyanate.
- Reaktive Katalysatoren wie z.B. Peroxide.

Mit den bisher bekannten Verfahren zur Modifizierung von Dispersionspulver-Zusammensetzungen können diese Flüssigkeiten in vielen Fällen erst bei der Anwendung, z.B. an der Baustelle, dem redispergierbaren Pulver zugegeben werden. Doch besteht hierbei die Gefahr einer verfahrens- oder mengenmäßig ungünstigen Zumischung. Schließlich ermöglicht das hier beanspruchte Verfahren auch den Zeitpunkt des Beginns der Wirkung der zugesetzten Flüssigkeit zu beeinflussen - je nachdem ob man einen Träger verwendet an dem die Flüssigkeit adsorptiv gebunden ist oder in dem sie ganz oder teilweise gelöst ist.

Beispiele:

Allgemeine Vorschrift:

In einer gewöhnlichen Küchenmaschine wurden 350 g des Trägermaterials vorgelegt und die Flüssigkeit innerhalb von ca. 30 Minuten bei Raumtemperatur zugetropft. Rührgeschwindigkeit: Stufe 1. Nach 10 Minuten Nachrühren wurde die pulverförmige Mischung, abgefüllt.
Die Zumischung dieser Pulverzusammensetzung in die Dispersionspulver-Zusammensetzung erfolgte in der gleichen Apparatur, ebenfalls bei Raumtemperatur.

Beispiel 1:

235 g Arkopal[R] N 060 (Alkylphenol(oligo)glykolether der Fa. Hoechst) wurden, wie oben beschrieben, auf 350 g Polyvinylalkohol WX 28/20 aufgetragen und dem mit Polyvinylalkohol stabilisierten, redispergierbaren Pulver auf Basis eines Vinylacetat/Ethylen-Copolymeren (RE 545 Z der Fa. Wacker-Chemie) im Mengenverhältnis 5 : 98 zugemischt.
Die Verblockungsneigung verstärkte sich nicht im Vergleich zum nicht mit Arkopal[R] modifizierten Dispersionspulver. Die Redispergierbarkeit war ebenfalls unverändert gut.

Beispiel 2:

190 g Arkopal[R] N 060 (Alkylphenol(oligo)glykolether der Fa. Hoechst) wurden, wie oben beschrieben, auf 350 g Polyvinylchlorid (VH 315/100 der Fa. Vinnolit) aufgetragen und dem mit Polyvinylalkohol stabilisierten, redispergierbaren Pulver auf Basis eines Vinylacetat-VeoVa-Vinyllaurat-Copolymeren (RI 538 Z der Fa. Wacker-Chemie) im Mengenverhältnis 5.7 : 98 zugemischt.
Die Verblockungsneigung verstärkte sich nicht im Vergleich zum nicht mit Arkopal[R] modifizierten Dispersionspulver. Die Redispergierbarkeit war ebenfalls unverändert gut.

Vergleichsbeispiel 1:

Bei der Herstellung des in Beispiel 2 eingesetzten redispergierbaren Pulvers (RI 538 Z) wurden, vor der Verdüsung der wäßrigen Dispersion des Copolymeren, dem Ansatz 2 Gew% Arkopal[R] N060, bezogen auf Festanteil, zugemischt. Das damit erhaltene Pulver enthielt schon vor der Lagerung nicht redispergierbare Klumpen. Auch die Trocknerwand, insbesonders am Konus nahe des Austritts, war stark belegt. Das gesiebte Pulver neigte stark zur Verblockung. Die Redispergierbarkeit war deutlich schlechter als bei dem Produkt aus Beispiel 2.

Beispiel 3:

75 g Arkopal[R] N 100 (Alkylphenol(oligo)glykolether der Fa. Hoechst) wurden, wie oben beschrieben, auf 350 g Bentonit aufgetragen und dem mit Polyvinylalkohol stabilisierten, redispergierbaren Pulver auf Basis eines Vinylacetat/Ethylen-Copolymeren (RE 526 Z der Fa. Wacker-Chemie) im Mengenverhältnis 17.5 : 98 zugemischt.

Die Verblockungsneigung verstärkte sich nicht im Vergleich zum nicht mit Arkopal$^R$ modifizierten Dispersionspulver. Die Redispergierbarkeit war ebenfalls unverändert gut.

Beispiel 4:

190 g Arkopal$^R$ N 060 (Alkylphenol(oligo)glykolether der Fa. Hoechst) wurden, wie oben beschrieben, auf 350 g Polyvinylchlorid (VH 315/100 der Fa. Vinnolit) aufgetragen und dem mit Polyvinylalkohol stabilisierten, redispergierbaren Pul.ver auf Basis eines Vinylacetat-N-Methylolacrylamid-Copolymeren mit 0.8 Gew% NMA-Anteil (LL 5001 der Fa. Wacker-Chemie GmbH) im Mengenverhältnis 5.7 : 98 zugemischt.
Die Verblockungsneigung verstärkte sich nicht im Vergleich zum nicht mit Arkopal$^R$ modifizierten Dispersionspulver. Die Redispergierbarkeit war ebenfalls unverändert gut.

Beispiel 5:

190 g BCA (Weichmacher auf Basis Ethylenglykolmonobutyletheracetat) wurden, wie oben beschrieben, auf 350 g Polyvinylchlorid (VH 315/100 der Fa. Vinnolit) aufgetragen. 8.7 g des erhaltenen Pulvers wurden zu 97.3 g eines mit Polyvinylalkohol stabilisierten, redispergierbaren Pulvers auf Basis eines Vinylacetat-N-Methylolacrylamid-Copolymeren mit 0.8 Gew% NMA-Anteil, welches 10 Gew% Hydrite als Antiblockmittel enthielt, zugemischt.
Die Verblockungsneigung verstärkte sich nicht im Vergleich zum nicht mit Arkopal modifizierten Dispersionspulver. Die Redispergierbarkeit war ebenfalls unverändert gut.

Vergleichsbeispiel 2:

Bei der Herstellung des in Beispiel 5 eingesetzten redispergierbaren Pulvers (VAc-NMA-Copo) wurde, vor der Verdüsung der wäßrigen Dispersion des Copolymeren, das BCA in in Wasser emulgierter Form zugemischt. Das nach der Verdüsung erhaltene Pulver war nicht blockstabil.

Beispiel 6:

150 g Methyltriethoxysilan (Siedepunkt 142°C) wurden, wie oben beschrieben, auf 350 g Rotisorb$^R$ der Fa. Roth aufgetragen und das erhaltene Pulver dem mit Polyvinylalkohol stabilisierten, redispergierbaren Pulver auf Basis eines Vinylacetat/Ethylen-Copolymeren (RE 545 Z der Fa. Wacker-Chemie) im Mengenverhältnis 1 : 9 zugemischt. Das Pulver war sehr gut redispergierbar und verblockungsstabil. Eine Coverdüsung des Silans war wegen des niedrigen Siedepunktes nicht möglich.

Beispiele 7 bis 9:

Die erfindungsgemäß modifizierten Dispersionspulver wurden in der Anwendung als Fliesenkleber mit solchen Fliesenkleber-Zusammensetzungen verglichen, bei denen der flüssige Zusatzstoff erst bei der Herstellung der Fliesenkleber-Zusammensetzung zugegeben wurde.
Fliesenkleber-Basisrezeptur:

| | |
|---|---|
| 350 g | Portlandzement PZ 35 F |
| 120 g | Quarzsand F 32 (Fa. Quarzwerke Frechen) |
| 476 g | Quarzsand Nr. 12 (Fa. Amberger Kaolinwerke) |
| 50 g | Dispersionspulver |
| 4 g | Methylhydroxyethylcelluloseether (MHEC) |
| 1000 g | |
| Anmachwassermenge: ca. 230 ml auf 1000 g Trockenmischung | |

Testung der Benetzungszeit:

Zur Testung wurden Etaplan-Platten mittels einer Zahnspachtel mit den in den Beispielen 7 bis 9 angegebenen Fliesenkleber-Zusammensetzungen beschichtet. Dann wurden in Abständen von einer Minute Keramikfliesen (5 cm x 5 cm) aufgelegt und jeweils 30 Sekunden mit 2 kg belastet. Die Keramikfliesen wurden nach einer Stunde abgehoben. Es wurde die Zeit (Benetzungszeit) bestimmt, bis zu der man mit dem Auflegen der Fliesen warten konnte, um noch eine 50 %-ige Benetzung der Fliesen mit Klebemittel zu erhalten. Die Benetzungszeit dient damit als Parameter für die "offene Zeit", in der die Fliesenkleber-Zusammensetzung noch verarbeitet werden kann. Als Grundmischung wird nachfolgend die obige Fliesenkleber-Basisrezeptur ohne Dispersionspulver- und Celluloseether-Anteile bezeichnet.

Beispiel 7:

| Grundmischung [g] | 94.6 | 94.6 | 94.6 |
|---|---|---|---|
| MHEC (15000 mPas, unmodifiziert) [g] | 0.4 | 0.4 | 0.4 |
| RI 538 Z (VAc/VeoVA/VL-Copo) [g] | 5.0 | 5.0 | --- |
| Arkopal N 060 (flüssig) [g] | --- | 0.1 | --- |
| modifiziertes Pulver aus Bsp. 2 [g] | --- | --- | 5.0 |
| Benetzungszeit [min] | 7 | 14 | 12 |

Beispiel 8:

| Grundmischung [g] | 94.6 | 94.6 | 94.6 |
|---|---|---|---|
| MHEC (15000 mPas, unmodifiziert) [g] | 0.4 | 0.4 | 0.4 |
| LL 5001 (VAc/NMA) [g] | 5.0 | 5.0 | --- |
| Arkopal N 060 (flüssig) [g] | --- | 0.1 | --- |
| modifiziertes Pulver aus Bsp. 4 [g] | --- | --- | 5.0 |
| Benetzungszeit [min] | 7 | 11 | 13 |

Beispiel 9:

| Grundmischung [g] | 94.6 | 94.6 | 94.6 |
|---|---|---|---|
| MHEC (30000 mPas, modifiziert) [g] | 0.4 | 0.4 | 0.4 |
| RI 538 Z (VAc/VeoVA/VL-Copo) [g] | 5.0 | 5.0 | --- |
| Arkopal N 060 (flüssig) [g] | --- | 0.1 | --- |
| modifiziertes Pulver aus Bsp. 2 [g] | --- | --- | 5.0 |
| Benetzungszeit [min] | 17 | 25 | 23 |

Die Ergebnisse aus den Beispielen 7 bis 9 zeigen, daß die durch Emulgatorzugabe angestrebte Verlängerung der "offenen Zeit" sowohl durch nachträgliche Zugabe des flüssigen Emulgators zur pulverförmigen Fliesenkleber-Rezeptur, als auch durch Einsatz des erfindungsgemäß mit Emulgator modifizierten Dispersionspulvers erhalten wird. Die Verwendung des erfindungsgemäß modifizierten Dispersionspulvers hat dabei für den Verarbeiter die Vorteile, daß ein Verarbeitungsschritt (Zumischung des Emulgators) eingespart wird, und die Problematik der schlechten Mischbarkeit von flüssigem Emulgator mit pulverförmiger Fliesenkleber-Rezeptur umgangen wird.

**Patentansprüche**

1. Verfahren zur Herstellung von mit Zusatzstoffen modifizierten, in Wasser redispergierbaren Dispersionspulver-Zusammensetzungen auf der Basis von Polymerisaten ethylenisch ungesättigter Verbindungen durch Trocknung der entsprechenden wäßrigen Polymerisat-Dispersionen und Zugabe der Zusatzstoffe, **dadurch gekennzeichnet, daß** die bei einer Temperatur von $\leq 50°C$ flüssigen Zusatzstoffe auf eine pulverförmige Trägersubstanz aufgebracht werden, und das so erhaltene Pulver nach der Trocknung zugegeben wird.

**2.** Verfahren nach Anspruch 1, **dadurch gekennzeichnet, daß** als Trägersubstanzen anorganische oder organische Materialien mit einer Teilchengröße von 0.005 bis 3000 µm und/oder einer BET-Oberfläche von > 10 m$^2$/g eingesetzt werden.

**3.** Verfahren nach Anspruch 1 bis 2, **dadurch gekennzeichnet, daß** wasserlösliche oder wasserunlösliche Trägersubstanzen mit einer Flüssigkeitsaufnahme von 10 bis 75 Gew%, bezogen auf das Gesamtgewicht an Trägersubstanz, in denen die flüssigen Zusatzstoffe nicht oder nur schwerlöslich sind, eingesetzt werden.

**4.** Verfahren nach Anspruch 3, **dadurch gekennzeichnet, daß** als Trägersubstanzen ein oder mehrere Substanzen aus der Gruppe gefällte Kreide, feinteilige Carbonate wie Magnesiumcarbonat oder Calciumcarbonat, Magnesiumhydrosilicate, Titandioxid, Tonerden, Bleicherden, aktiviertes Aluminiumoxid, Vermiculite, expandiertes Perlit, Phosphate wie Na-Phosphat, wasserlösliche oder wasserunlösliche Polyvinylalkohole, wasserlösliche oder wasserunlösliche Cellulose(derivate), wasserlösliche oder wasserunlösliche Stärke(derivate), Polyvinylchlorid-Pulver, Polystyrol-Pulver eingesetzt werden.

**5.** Verfahren nach Anspruch 1 bis 2, **dadurch gekennzeichnet, daß** als Trägersubstanzen wasserunlösliche eingesetzt werden, in denen die flüssigen Zusatzstoffe löslich sind, und welche mehr als 10 Gew% ihres Gewichts von dem flüssigen Zusatzstoff aufnehmen können, ohne dabei zu verkleben.

**6.** Verfahren nach Anspruch 5, **dadurch gekennzeichnet, daß** als Trägersubstanzen ein oder mehrere aus der Gruppe der Kautschuke wie Naturkautschuk, Isopren-, Styrolbutadien-, Chloropren-, Butadienacrylnitril-, Isobutylenisopren-, Ethylenpropylendien-, Acrylatbutadien-, Polysulfid-, Silicon-, Butadien-, Epichlorhydrinethylenoxid-Kautschuk, oder der Duroplaste wie Epoxiharze, Melamin-, Harnstoff-, Phenolformaldehyd-Harze, Polyesterharze, Siliconharze, oder der vernetzten Polyvinylalkohole und der vernetzten Polysaccharide eingesetzt werden.

## Claims

**1.** Process for the preparation of water-redispersible dispersion powder compositions which are modified with additives and are based on polymers of ethylenically unsaturated compounds, by drying the corresponding aqueous polymer dispersions and adding the additives, **characterized in that** the additives, which are liquid at a temperature of ≤ 50°C, are applied to a pulverulent carrier material and the resulting powder is added during or after drying.

**2.** Process according to Claim 1, **characterized in that** inorganic or organic materials with a particle size of from 0.005 to 3000 µm and/or a BET surface area of > 10 m$^2$/g are employed as carrier materials.

**3.** Process according to Claim 1 to 2, **characterized in that** water-soluble or water-insoluble carrier materials with a liquid uptake of from 10 to 75 % by weight, based on the total weight of carrier material, in which the liquid additives are insoluble or only sparingly soluble are employed.

**4.** Process according to Claim 3, **characterized in that** one or more substances from the group consisting of precipitated chalk, finely divided carbonates such as magnesium carbonate or calcium carbonate, magnesium hydrosilicates, titanium dioxide, argilaceous earths, bleaching earths, activated alumina, vermiculites, expanded perlite, phosphates such as Na phosphate, water-soluble or water-insoluble polyvinyl alcohols, water-soluble or water-insoluble cellulose (derivatives), water-soluble or water-insoluble starch (derivatives), polyvinyl chloride powders and polystyrene powders are employed as carrier materials.

**5.** Process according to Claim 1 to 2, **characterized in that** water-insoluble carrier materials are employed in which the liquid additives are soluble and which can take up more than 10 % by weight of their weight of the liquid additive without becoming sticky.

**6.** Process according to Claim 5, **characterized in that** one or more carrier materials from the group consisting of rubbers such as natural rubber, isoprene rubber, styrene-butadiene rubber, chloroprene rubber, butadiene-acrylonitrile rubber, isobutylene-isoprene rubber, ethylene-propylene-diene rubber, acrylate-butadiene rubber, polysulphide rubber, silicone rubber, butadiene rubber or epichlorohydrin-ethylene oxide rubber or thermosets such as epoxy resins, melamine-formaldehyde resins, urea-formaldehyde resins and phenol-formaldehyde resins, polyester resins and silicone resins or crosslinked polyvinyl alcohols and crosslinked polysaccharides are employed.

**Revendications**

1.  Procédé pour la préparation de compositions de poudres de dispersions redispersables dans l'eau, modifiées avec des additifs, à base de produits de polymérisation de composés à insaturation éthylénique, par séchage des dispersions aqueuses correspondantes de produits de polymérisation et addition des additifs, **caractérisé en ce que** les additifs liquides à une température de ≤ 50°C sont appliqués sur une substance pulvérulente de support, et la poudre ainsi obtenue est ajoutée après le séchage.

2.  Procédé selon la revendication 1, **caractérisé en ce qu'**on utilise comme substances de support des matériaux organiques ou minéraux ayant une taille de particule de 0,005 à 3 000 μm et/ou une surface BET de > 10 m$^2$/g.

3.  Procédé selon la revendication 1 ou 2, **caractérisé en ce qu'**on utilise des substances de support hydrosolubles ou insolubles dans l'eau, présentant une absorption de liquide de 10 à 75 % en poids, par rapport au poids total de substance de support, dans lesquelles les additifs liquides ne sont pas ou ne sont que difficilement solubles.

4.  Procédé selon la revendication 3, **caractérisé en ce qu'**on utilise comme substances de support une ou plusieurs substances choisies dans le groupe constitué par la craie précipitée, des carbonates finement divisés, tels que le carbonate de magnésium ou le carbonate de calcium, des hydrosilicates de magnésium, le dioxyde de titane, des alumines, des terres décolorantes, l'oxyde d'aluminium activé, les vermiculites, la perlite expansée, des phosphates tels que le phosphate de Na, des poly(alcool vinylique)s hydrosolubles ou insolubles dans l'eau, la cellulose (les dérivés de cellulose) hydrosolubles ou insolubles dans l'eau, l'amidon(les dérivés d'amidon) hydrosolubles ou insolubles dans l'eau, la poudre de poly(chlorure de vinyle), la poudre de polystyrène.

5.  Procédé selon la revendication 1 ou 2, **caractérisé en ce qu'**on utilise comme substances de support des substances de support insolubles dans l'eau dans lesquelles sont solubles les additifs liquides et qui peuvent absorber plus de 10 % en poids de leur poids de l'additif liquide, sans s'agglutiner.

6.  Procédé selon la revendication 5, **caractérisé en ce qu'**on utilise comme substances de support une ou plusieurs substances choisies dans le groupe des caoutchoucs tels que le caoutchouc naturel, le caoutchouc isoprène, styrène-butadiène, chloroprène, butadiène-acrylonitrile, isobutylène-isoprène, éthylène-propylène-diène, acrylate-butadiène, polysulfure, silicone, butadiène, épichlorhydrine-oxyéthylène, ou des matières thermodurcissables telles que des résines époxy, des résines mélamine, urée, phénol-formaldéhyde, polyester, silicone, ou des poly(alcool vinylique)s réticulés et des polysaccharides réticulés.